(19)

Europäisches
Patentamt
European
Patent Office
Office européen
des brevets

(11) **EP 4 304 073 A1**

(12) **EUROPEAN PATENT APPLICATION**

(43) Date of publication:
**10.01.2024 Bulletin 2024/02**

(21) Application number: **22183835.2**

(22) Date of filing: **08.07.2022**

(51) International Patent Classification (IPC):
**H02M 7/487** (2007.01)     **H02M 1/00** (2006.01)
**H02M 7/483** (2007.01)

(52) Cooperative Patent Classification (CPC):
**H02M 7/487; H02M 1/007; H02M 1/0095;
H02M 7/4835;** H02M 7/49

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB SCHWEIZ AG
5400 Baden (CH)**

(72) Inventors:
• **KIEFERNDORF, Frederick
5400 Baden (CH)**
• **SCHWEIZER, Mario
5406 Rütihof (CH)**
• **TSOUMAS, Ioannis
8032 Zürich (CH)**

(74) Representative: **Qip Patentanwälte
Dr. Kuehn & Partner mbB
Goethestraße 8
80336 München (DE)**

(54) **MODEL PREDICTIVE CONTROL FOR CONVERTER WITH FILTER CELLS BASED ON OFFLINE-COMPUTED PULSE PATTERNS AND ONLINE CELL BALANCING**

(57)     An electrical converter (10) comprises a main stage (12) adapted for converting a DC voltage into an intermediate voltage comprising at least two voltage levels and a filter cell stage (14) with a filter cell (30) for each phase of the main stage (12), each filter cell (30) being adapted for adding or subtracting a cell voltage of the filter cell (30) to the intermediate voltage. A method for controlling an electrical converter (10) comprises a pattern determination part (44) comprising the steps of: selecting and reading an offline-computed optimized pulse pattern ($OPP_{base}$) from a database, wherein the selected optimized pulse pattern ($OPP_{base}$) comprises switching instants for the main stage (12) and the filter cells (30) over a next computation window ($\alpha_{win}$) of a predetermined width ($\alpha_w$); adjusting the optimized pulse pattern ($OPP_{base}$) by moving its switching instants such that average output voltages generated in the filter cells (30) are shifted towards an average output voltage reference ($U_{bal,abc}$) of the filter cells (30), which is determined from measurements in the filter cells (30), and compensating these adjustments by corresponding modifications of switching instants of the main stage (12). The method comprises further a model predictive control part (46) comprising the following steps, which are performed several times during the next computation window ($\alpha_{win}$): modifying the adjusted optimized pulse patterns (66) by moving at least one transition time of a switching instant, such that a flux error determined from a difference between an estimated flux (74) of the electrical converter (10) and a reference flux trajectory ($\Psi_{ref}$) is minimized; and applying at least a next switching instant from the modified adjusted pulse pattern to the electrical converter (10).

Fig. 2

**Description**

FIELD OF THE INVENTION

The invention relates to the field of high power converter control. In particular, the invention relates to a method, a computer program, a computer-readable medium and a controller for controlling an electrical converter. The invention also relates to the electrical converter.

BACKGROUND OF THE INVENTION

In particular in medium voltage applications, a cost effective electrical converter topology with high power quality is given with the 3L(A)NPC+AF topology. Here, 3L means 3 level, (A)NPC means neutral point clamped and/or active neutral point clamped and AF means active filter. The 3L(A)NPC is also referred to as main stage of the converter herein in the following. This topology has been proposed several years ago. However, optimized hardware design, reliable control and failure-proof operation is still a challenge.

One of the main advantages of the topology is the small voltage steps that can be generated. The small voltage steps reduce the machine-side dv/dt and overvoltages, as well as the current THD (total harmonic distortion) and involved harmonic losses in the machine.

Balancing of the active filter cell voltages is one of the main challenges in controlling this system. The active filter cells have no external supplies and are therefore required to inject zero average voltage over a fundamental period, otherwise the cells will charge/discharge. To fully benefit from the improved power quality, a control scheme needs to cover the entire range of operating points of the machine, from low speed to high speed, and needs to balance the active filter cell voltages in all operating points.

The control scheme may work with optimized pulse patterns (OPPs) which are computed offline and stored in a lookup-table or database. As, for example, described in EP 2 469 692 A1, optimized pulse patterns may be modified online based on model predictive control, wherein pre-computed optimized pulse pattern switching angles are modified online in order to follow a reference flux trajectory. Generally, an optimized pulse pattern may be a sequence of switching transitions that has been optimized with respect to a certain optimization goal. For example, optimized pulse patterns may be computed offline for all modulation indices and switching frequencies of the motor, or of any other physical system that acts as the load of the converter, and may be optimized such that the overall current distortion for a given switching frequency is minimal.

In particular for a control scheme based on model predictive pulse pattern control (also denoted as MP3C core algorithm herein below), a balancing scheme must also be compatible with the full range of operation. A previously developed balancing concept for the active filter cells was based on common mode injection. For example, it included the steps of, first, equalizing the cell voltages, and then adjusting the cell voltages of all (e.g. three) phases to the reference together. However, this method had shortcomings, not operating as intended in certain operating points and could lead to oscillations of the filter cell voltages.

Existing control schemes for nominal-speed operation of a 3L(A)NPC+AF converter can be summarized as follows:

One possibility is a conventional real-time carrier-based pulse width modulation (CB-PWM) for the main stage (3L(A)NPC) and for the filter cell stage (AF) of the converter. The error signal derived from the difference of the main stage switching state and the sinusoidal voltage reference is fed to a PWM modulator for the filter cells. A balancing signal is added on top to stabilize the filter cells. This scheme uses a different top-level control scheme, such as vector current control, and may be not compatible with the MP3C core. Furthermore, if the ratio between the filter cell voltage and the main stage half dc-link voltage is lower than 40%, the modulator of the filter cell might be driven into an overmodulation range repeatedly, which could lead to difficulties in balancing the cell voltage.

Another possibility is an OPP-based MP3C for a 3L(A)NPC+AF converter with common mode injection to balance the filter cells. As mentioned above, this control scheme might not perform as intended at certain operating points, which may lead to low frequency oscillations of the cell voltages. In addition, the cell voltages cannot be independently controlled.

DESCRIPTION OF THE INVENTION

It is an objective of the invention to improve the control of an electrical multi-level converter including filter cells. Further objectives of the invention are to reduce the computational demand of such a control method and to reduce total harmonic distortion and losses of the electrical converter.

These objectives are achieved by the subject-matter of the independent claims. Further exemplary embodiments are evident from the dependent claims and the following description.

An aspect of the invention relates to a method for controlling an electrical converter. The electrical converter may be a medium or high voltage converter adapted for processing voltages up to 6.6kV or more. The method may provide an algorithm for operation of the converter at medium to nominal fundamental frequency of a motor or any other physical system that acts as the load of the converter.

According to an embodiment of the invention, the electrical converter comprises a main stage adapted for converting a DC voltage into an intermediate voltage comprising at least two voltage levels. The main stage may comprise one or more (A)NPC half-bridges, which are connected in parallel to a DC link. The output of the half-bridges may be the intermediate voltage, which may be a multi-phase, in particular three-phase voltage. Dependent on the topology of the main stage, the output voltage may have two, three, five or more voltage levels. In the case of 3L(A)NPC half-bridges, there may be three output voltage levels.

According to an embodiment of the invention, the electrical converter further comprises a filter cell stage (also briefly denoted as "cell stage" in the following) with a filter cell for each phase of the main stage, wherein each filter cell is adapted for adding or subtracting a cell voltage of the filter cell to the intermediate voltage. Each filter cell may comprise a cell capacitor providing the cell voltage, which is connected in parallel with two half-bridges providing an input and an output of the filter cell. The filter cell stage may be seen as an active filter (AF) of the electrical converter.

According to an embodiment of the invention, the method comprises a pattern determination part comprising the steps of: selecting and reading an offline-computed optimized pulse pattern (OPP) from a database (i.e. an offline-generated lookup table), wherein the selected optimized pulse pattern comprises switching instants for the main stage and for the filter cell stage over a next computation window of a predetermined length or width within a fundamental period of the main stage; adjusting the selected optimized pulse pattern by moving its switching instants such that average output voltages generated in the filter cells are shifted towards an average output voltage reference of the filter cells, based on measurements in the filter cells; and compensating these adjustments of the cell stage by corresponding modifications of switching instants of the main stage.

The average output voltage reference of the filter cells may thus be used for balancing the filter cell capacitor voltages. A nominal cell pulse pattern for each filter cell, which may be determined from the selected optimized pulse pattern, is then adjusted such that the filter cells will be better balanced. To achieve this, the switching instants of the cell pulse pattern are moved such that this objective is achieved. Balancing means that the cell capacitor voltage is moved towards a cell capacitor voltage reference. The cell capacitor voltage reference may be the desired voltage of the cell capacitor.

For example, a typical configuration of an electrical converter with 3L(A)NPC+AF topology (see above) foresees a rather low cell voltage of a filter cell, typically 1/3 of half the DC link voltage of the main stage or even lower, such as 1/5 of half the DC link voltage of the main stage. The offline-generated pulse patterns for the filter stage (AF) are generated such that the fundamental component is zero. This does not mean, however, that the average filter cell voltage will be zero over a computation window. Therefore, a sophisticated balancing method is required that ensures no change in the combined output voltage average of the main stage (3L(A)NPC) and the cell stage (AF) over a computation window. For this, in the present method, a time-domain based average adjust algorithm as described herein has been implemented that is capable of enforcing an arbitrary average of the filter cell output voltage over a given computation window.

To determine the average output voltage reference, the capacitor voltages of the filter cells may be measured, compared to capacitor voltage references and further manipulated, to generate a filter cell average output voltage reference signal for cell balancing. Furthermore, the injected balancing voltage for the filter cells may be compensated by modifying the switching instants for the main stage such that the sum of the main stage and filter cell stage voltages (e.g. for each of three or another number of phases) is unchanged and no impact on a flux trajectory or the torque control of the converter occurs.

In general, the optimized pulse pattern may comprise two pulse patterns, a main pulse pattern for the main stage and a cell pulse pattern for the filter cell stage. Otherwise, i.e. if the optimized pulse pattern is provided as a total (i. e. combined or cumulative) pulse pattern for both the main stage and the cell stage, it may be parsed into a main pulse pattern for the main stage and a cell pulse pattern for the cell stage, prior to carrying out the adjustments. Each pulse pattern is or comprises one or more sequences of switching instants over a specific time interval, namely the next computation window.

A switching instant indicates a time point and/or transition time and switch positions to be switched to at the time point. In other words, the following data may be stored in a pulse pattern for each switching instant, i.e. for each transition: a transition angle, final position at end of transition and change in position at transition.

It has to be noted that the optimized pulse pattern or, respectively, the corresponding main pulse pattern and cell pulse pattern may be multi-phase quantities, i.e. there may be different switching instants for every phase of the intermediate voltage.

The optimized pulse pattern may be provided as a multi-phase pulse pattern from the outset. Otherwise, i.e. if the optimized pulse pattern is provided as a single-phase pulse pattern, it may be partitioned into separate phases such as to obtain a multi-phase pulse pattern, in order to carry out the adjustments for each phase of the intermediate voltage separately.

According to an embodiment of the invention, the method further comprises a model predictive control part comprising the following steps, which are performed several times during the next computation window: modifying the adjusted optimized pulse patterns (or the corresponding main pulse patterns and cell pulse patterns) by moving at least one transition time of a switching instant such that a flux error determined from a difference between an estimated flux of the electrical converter and a reference flux trajectory is minimized; and applying at least a next switching instant from the modified adjusted pulse pattern to the electrical converter.

The model predictive control part as well as the model predictive control may be performed like in EP 2 469 692 A1, which is incorporated by reference. Also, in the chapter "pattern controller" of EP 3 729 637 A1, which is incorporated by reference, model predictive control of pulse patterns created based on pulse width modulation is described.

The model predictive method tries to optimize a control objective, which may be modelled with an objective function. The objective function is a function depending on parameters and quantities determined from the adjusted optimized pulse pattern (or the two adjusted pulse patterns for the main stage and the cell stage, respectively) with time-shifted switching instants. Pulse pattern switching instants are time-shifted in order to minimize the objective function.

The objective function is modelled to minimize a flux error between an estimated flux of the electrical converter and the reference flux trajectory. The actual, estimated flux may be determined from measurements in the electrical converter.

When the adjusted pulse patterns have been optimized (i.e. modified) in this manner, at least a next switching instant is applied to the electrical converter, i.e. the main stage and/or the filter cell stage. This is done by switching the switches of the main stage and/or the filter cell stage to a position as demanded by the switching instant.

The model predictive control part can be repeated several times with the same pulse patterns and reference flux trajectory as determined in the pattern determination part. The same adjusted pulse patterns, e.g. the same main pulse pattern and the same cell pulse pattern, as determined by the pattern determination part may be again used in the model predictive control part at a later time instant, for again calculating the next switching instant.

The model predictive control part may be performed much more often, meaning with a higher execution frequency, than the pattern determination part. In the pattern determination part, the adjusted optimized pulse pattern or the two adjusted pulse patterns for the main stage and the cell stage are provided, for example as a look-up table, so as to be used in the model predictive control part as input for the optimizer, which shifts the transition times, several times.

The model predictive control part may select an appropriate offline-computed OPP (to be adjusted in the pattern determination part) based on outer control loops which, for example, may generate a required modulation index and flux reference angle. To account for field weakening, the flux reference amplitude may need to be scaled further.

According to an embodiment of the invention, the next computation window may be a fixed range of angles with respect to the optimized pulse pattern. The length, the starting angle and/or the ending angle of the next computation window may be fixed with respect to the optimized pulse pattern.

According to an embodiment of the invention, the next computation window may be a time period of a predetermined length within a fundamental period of the main stage, or of a reference output voltage of the electrical converter. For example, the computation window may be a time period corresponding to 1/6 (or to an angle width of 60°) of the fundamental period.

If the main stage fundamental frequency range is, for instance, 25 - 60 Hz, the execution period of the pattern determination part algorithm with an update frequency equivalent to 60° of a fundamental period would be 6.7ms - 2.8ms. This would leave sufficient time for the computation required for the algorithm without undue computational burden. Since the pulse patterns for the main stage can have very low pulse numbers, it will often be the case that only two out of the three phases switch. To ensure that there are always at least two phases available, a modulation index dependent offset of the next computation window can be set accordingly.

In particular, the pattern determination part algorithm proposed herein is compatible with model predictive pulse pattern control (also briefly denoted as MP3C core algorithm) using offline-computed OPPs. As already mentioned, from a selected offline-computed optimized pulse pattern, the pattern determination part may compute corresponding nominal pulse patterns for the main stage and the (active) filter cell stage online repeatedly for the upcoming computation window and/or generate a multiple-phase OPP from the original single-phase OPP. Subsequently, the nominal pulse pattern of the filter cell stage is adjusted to achieve cell balancing and further adjustments may be carried out as described herein above and in the following. Then, based on the adjusted pulse patterns, an accurate flux reference trajectory may be precomputed for the upcoming computation window. Finally, the adjusted pulse patterns and the corresponding flux reference trajectory may be written into look-up tables and passed to the model predictive control part. The model predictive control part ensures closed-loop control by tracking the provided flux reference trajectory with online-modifications of the provided adjusted optimized pulse pattern.

Compared to other approaches that are used to control a converter comprising a main stage and a filter cell stage, the proposed pattern determination part of the method may, in particular, have the following advantages:

- It is compatible with the model predictive control part of the method and it may be aligned with the low-speed flux trajectory and pulse pattern generation methods. Consequently, only one control scheme is required for low and nominal speed operation and no complicated switch-over logic is necessary.

- It incorporates a time-domain based filter cell voltage balancing approach. Since the adjustment of the optimized pulse patterns is done by shifting the switching instants in the time domain, it does not rely on power transfer at the fundamental frequency and therefore can operate even at zero fundamental frequency (stand-still). The approach is therefore more straightforward and simpler to implement and may also operate very well during transients. In particular, the cell voltages may be stabilized very effectively.

- It can be calculated with a reduced update frequency (e.g. equivalent to 60° of the fundamental period). If a fundamental frequency range of 20-60 Hz is assumed, this corresponds to an update rate of 8.3-2.8 ms or a maximum update frequency of about 360 Hz. Thus, the algorithm of the pattern determination part can run as a background task, leaving enough computational resources for other fast control blocks, such as the model predictive control part.

- Each phase active filter cell voltage can be independently balanced in the adjustment step.

- It can easily handle synchronized pulses between the main stage and the filter cell stage as may be required for voltage step reduction (VSR).

- An online reference flux trajectory can easily be computed using the offline-calculated nominal flux trajectory as an initial condition for each computation window.

According to an embodiment of the invention, each phase of the average output voltage reference corresponding to a filter cell is based on a difference of a measured capacitor voltage signal of the filter cell and a reference capacitor voltage of the filter cell. The capacitor voltage signals may be filtered with a low pass filter to reduce ripple and a capacitor voltage reference may subsequently be subtracted. For example, the cell capacitor voltages of the filter cells in the three (or any other number of) phases of the intermediate voltage may be measured individually and optionally processed with low pass (moving average) filters. The differences obtained by subtracting the reference capacitor voltage of the filter cells may be processed with proportional (P) or proportional integral (PI) controllers. The output signals can be interpreted as non-zero difference voltage references that need to be injected by the filter cells in order to accumulate charge in the filter cell capacitor and consequently charge or discharge the cell capacitor.

If the cell (capacitor) voltage matches the reference (capacitor) voltage, the average voltage created by the filter cell over one computation window should be unchanged since the OPPs are generated such that the fundamental component of the cell pulse pattern is zero. The fundamental component power is provided only by the main stage. Further, the signs of the phase currents may be accounted for such that the difference voltage command for the filter cell drives the cell voltage in the correct direction, i.e. the PI-controller output signals are multiplied with the sign of the corresponding phase current. To compensate for delays in the current measurement and to avoid applying the wrong sign over the computation window, the phase angle of the fundamental current relative to the flux reference angle can be used as a reference from which the current sign can be advanced, so that the correct sign is applied over the upcoming computation window.

As mentioned above, the balancing voltage to be injected by the filter cells may be compensated for by the main stage such that the sum of the main stage and cell stage (three phase) voltages is unchanged and no impact on the flux trajectory or the torque control occurs. Since the pulse patterns for the main stage can have very low pulse numbers, it will often be the case that only two out of the three phases switch. To ensure that there are always at least two phases available, the modulation index dependent offset of the computation window may be set accordingly. To properly compensate the voltage injected by the filter cells, a differential mode signal may be distributed to the main stage phases that are switching. The desired volt-second shift for each of the filter cell phases may then be computed taking into account the possible pre-shift of the synchronized angles of each filter cell. The result may be a total effective volt-second shift reference for each of the cell pulse patterns. The originally selected optimized pulse pattern, e.g. a total multi-phase pulse pattern for the main and filter stage, is then updated (i.e. adjusted) with the modified switching instants.

To avoid that the model predictive control part modifies the adjusted optimized pulse pattern such that a balancing of the filter cells is destroyed, the reference flux trajectory may be determined over the next computation window from the adjusted optimized pulse pattern. This may not only ensure that a cell voltage balancing algorithm works as intended, but also simplify balancing of the neutral point potential of the main stage.

Therefore, according to an embodiment of the invention, the pattern determination part further comprises determining the reference flux trajectory over the next computation window from the adjusted optimized pulse pattern. This may be done by integrating the output voltage as indicated by the total adjusted optimized pulse pattern or, as the case may be, by integrating the sum of the output voltage of the main stage as indicated by the adjusted main pulse pattern and the output voltage of the filter cell stage as indicated by the adjusted cell pulse pattern.

The reference flux trajectory may be a vector quantity, for example with a component of each phase or a vector quantity in the orthogonal reference frame described with two components (referred to as alpha-beta components in the following).

The reference flux trajectory may be determined for a specific angle range, which corresponds to the next computation window. The usage of the reference flux trajectory may be beneficial, because it includes a flux ripple and therefore matches with the adjusted pulse patterns. Consequently, without outer disturbances, the adjusted pulse patterns are applied without modifications.

It also may be possible to directly use a circular flux trajectory as reference flux trajectory. However, in this case the pattern switching instants may be modified by the model predictive controller to better match a circle and therefore may overwrite the adjustments and may disturb the cell balancing goal.

If the offline-computed optimized pulse pattern contains a nominal flux trajectory which is also calculated offline, as typically will be the case, the initial flux trajectory angle and alpha-beta components can be interpolated easily and used as the starting point for an accurate calculation of the ripple in the reference flux trajectory using a simple piecewise integration of the adjusted optimized pulse pattern. The newly generated reference flux trajectory corner points may consist of unique angles in the $\alpha\beta$-plane plus the flux $\alpha\beta$-components over the computation window. In the case where neutral point balancing is also taken into account as described further below, the nominal flux trajectory may, for example, be only used as the initial condition every second or third update. Otherwise, the endpoint of the previously calculated flux trajectory segment may be used as the starting point for the next computation window. This may ensure that the neutral point balancing adjustment occurs over 120° or 180°.

According to an embodiment of the invention, the main stage of the electrical converter comprises a DC link, and the method further comprises adjusting the optimized pulse pattern in the pattern determination part by moving the switching instants of the optimized pulse pattern such as to shift a measured voltage difference between an upper DC link voltage and a lower DC link voltage of the DC link to a reference neutral point voltage (nominally zero). This part of the adjustment procedure is also denoted herein as neutral point (NP) potential balancing. For example, the difference between the upper and the lower DC link voltages, as obtained from measurements, may be calculated and optionally processed with a low pass (moving average) filter. The result is then compared to the reference neutral point voltage value (which may, for example, nominally be zero), and the difference obtained from this comparison may be processed e.g. with a P- or PI-controller. The neutral point error may, for example, be compensated by correspondingly adjusting the main stage pulses. The correction can, for instance, be added as a common mode component to the main stage pulse pattern, but it can also be added by shifting the angles or other parameters of switching instants of the total optimized pulse pattern in other ways. As mentioned above, this neutral point balancing adjustment may occur over 120° or 180° of the fundamental period.

According to an embodiment of the invention, the method comprises determining whether a flux reference angle is within the computation window; generating a trigger signal if the flux reference angle leaves the computation window; and triggering the pattern determination part of the method by said trigger signal. The trigger signal may, for example, be generated based on the flux reference angle and the modulation index provided by the outer loop controllers as well as an angle representing the delay until the next control cycle. If the trigger signal is true, the nominal pulse patterns provided by the pattern determination part, e.g. a 3-phase set of patterns, may be updated e.g. for the next computation window. For example, the offset of the computation window may be determined by the modulation index, and from this it may be determined if the flux reference angle is within the current window. Determining this may also take into account any delays in a microcontroller, in order to ensure that the pulse pattern for the next computation window is always available. This may also include double buffering of the pattern, so that a next pattern can always be switched to if necessary. This ensures that there is always a pattern available to feed into the model predictive control part of the method.

If it is determined, as described above, that an update is required, the currently available offline-computed optimized pulse pattern, e.g. a single-phase OPP, may be read from the model predictive control part and partitioned into the three (or another number of) phases over the next computation window. The resulting new multiple-phase pattern may then be parsed into respective switching instants for the main stage and for the filter cell stage, for example including angles for the main stage and for the filter cell stage along with the corresponding switch positions and change in switch positions. It may be that the first angle is always zero and the last angle is always the length of the computation window. The switching angles may be, for example, normalized by subtracting the starting angle of the computation window and taking care that the crossing over from 360° to 0° is accounted for. A flag may also be generated for each cell stage angle which is synchronized with a main stage angle, which can be done to reduce the combined voltage step by switching with a double step size in the opposite direction.

According to an embodiment of the invention, the steps in the pattern determination part are performed by a pattern determination controller and the steps in the model predictive control part are performed by a model predictive controller. Execution of the model predictive control part may be independent and/or may typically need a higher update frequency for closed-loop control. The two parts of the method, which are executed at different speed, may be performed by two different controllers. The model predictive controller may have a faster execution speed than the pattern determination controller. For example, the speed of the model predictive controller may be at least 10 times faster than the one for the pattern determination controller.

After adjustments carried out as described herein above and below, the resulting updated optimized pulse pattern, which may be, for example, a total multi-phase pulse pattern, may be stored in a look-up table during the pattern determination part and made available to the model predictive part for use in the next computation window. According to an embodiment of the invention, the adjusted optimized pulse pattern may be stored along with the newly generated reference flux trajectory in the look-up table. The table may be provided in a common memory of the pattern determination controller and the model predictive controller. In other words, the content of the look-up table, which is provided by the pattern determination controller, is used by the model predictive controller.

As mentioned above, online loading of the selected offline-computed optimized pulse patterns, followed by filter cell balancing and other pattern adjustments as described herein, and the computation of the corresponding reference flux trajectory can be executed with a reduced update frequency (such as 360Hz), i.e. with a long time period. It can be aligned e.g. with a computation window equivalent to 60° of the fundamental period. Execution of the model predictive control part is independent and typically needs a higher update frequency for closed-loop control.

According to an embodiment of the invention, the algorithm calculates the adjusted optimized pulse pattern and corresponding flux reference for the next two computation windows and stores them in the look-up tables. This may simplify implementation on a microcontroller because the algorithm can be run in a lower-priority interrupt and compute the nominal pattern for the next computation window while the model predictive part works on the active computation window with the corresponding adjusted optimized pulse pattern that has been previously computed in the pattern determination part.

As mentioned above, the model predictive control part executes the nominal pulse pattern and controls the flux (which may, for example, be the fundamental flux and the ripple) to follow the reference flux trajectory.

According to an embodiment of the invention, when a stator flux reference angle, for example as commanded and/or requested by an outer loop controller, is outside the angle range covered by the precomputed reference flux trajectory based on the adjusted optimized pulse pattern, the flux error is determined from a difference between the estimated flux of the electrical converter and a circular flux trajectory instead of from a difference between the estimated flux and the precomputed reference flux trajectory. For example, in case there is a torque step or any other disturbance that leads to a flux reference angle which is outside of the angle range corresponding to the computation window, the reference flux trajectory stored in the look-up table may be skipped and a circular flux reference may be used instead.

To sum up, the proposed active filter cell balancing method for the 3L(A)NPC +AF converter topology integrates seamlessly into OPP-based model predictive pulse pattern control (OPP-MP3C) which offers highly dynamic control response and superior power quality at the same time. The newly developed pattern determination part algorithm may, in particular, be based on a per-phase approach. The original optimized pulse pattern for main stage and the filter cell stage are manipulated (i.e. adjusted) online over a fixed precomputation window (e.g. 60°) to achieve the desired balancing action, and the flux trajectory reference may be recomputed, too. The pattern determination part can be executed with a reduced update frequency (e.g. every time period equivalent to 60° of the fundamental period), such that the computational burden is low. The proposed control scheme may, for example, incorporate the following four main steps: reading of the offline-computed optimized pulse patterns for 3L(A)NPC + AF; manipulating the pulse patterns over the next computation window to inject filter cell average voltage beneficial for rebalancing of the cells; reference flux trajectory precomputation over the computation window; creation of look-up tables containing the adjusted pulse pattern and the resulting flux reference and execution by the model predictive control part.

The control solution presented herein allows for and/or is based on an independent control of the three (or any other phase number) filter cell voltages. The control solution begins with the offline-computed OPPs and may generate independent patterns for each phase that ensures balancing of the active filter cells and optionally also of the neutral point potential of the main stage of the converter. It is compatible with a wide range of ratios between filter cell voltage and main stage half DC-link voltage, especially also covering low ratios of about 20%, which may be particularly important for a 6kV drive lineup.

Further aspects of the invention relate to a computer program for controlling an electrical converter, which, when being executed by a processor, is adapted to carry out the steps of the method as described herein, and to a computer-readable medium, in which such a computer program is stored. Both the pattern determination part and the model predictive control part may be executed as software on one or more processors.

It may be that the pattern determination controller has a processor and that the pattern determination part is executed on this processor. The pattern determination part may be stored in a memory of the pattern determination controller.

It also may be that the model predictive controller has a processor and that the model predictive control part is executed on this processor. The model predictive control part may be stored in a memory of the model predictive controller.

A computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller for controlling an electrical converter. The controller is adapted for performing the method as described herein. The controller may comprise a pattern determination controller for performing the steps in the pattern determination part of the method. The controller may comprise a model predictive controller for performing the steps in the model predictive control part of the method.

The controller may comprise one or more processors, in which the method is run as software. It also may be that the method is at least partially or completely implemented in hardware, such as a DSP or FPGA.

A further aspect of the invention relates to an electrical converter, which is controlled such as described herein.

According to an embodiment of the invention, the electrical converter comprises a main stage adapted for converting a DC voltage into an intermediate voltage comprising at least two voltage levels, a filter cell stage with a filter cell for each phase of the main stage, wherein each filter cell is adapted for adding or subtracting a cell voltage of the filter cell to the intermediate voltage, and a controller such as described herein.

In general, it has to be understood that features of the method as described in the above and in the following may be features of the computer program, the computer-readable medium, the controller and the electrical converter as described above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter according to an embodiment of the invention.

Fig. 2 shows a schematic block diagram of a controller according to an embodiment of the invention.

Figs. 3a and 3b show diagrams of fundamental current, its sign and its angle over several periods, illustrating how the current sign may change in an electrical converter according to an embodiment of the invention.

Fig. 3c shows a diagram illustrating how the sign of the current can be carefully accounted for in a filter cell balancer according to an embodiment of the invention.

Fig. 4 shows diagrams illustrating switching angles over a full range of modulation index for the main stage of an electrical converter according to an embodiment of the invention.

Fig. 5a shows a single-phase total optimized pulse pattern used in a control method according to an embodiment of the invention.

Fig. 5b shows individual phases of a three-phase total optimized pulse pattern obtained from the pulse pattern of Fig. 5a in a control method according to an embodiment of the invention.

Fig. 6 shows a table of decoding total switch positions into switch positions for the main stage and the filter cell stage in a control method according to an embodiment of the invention.

Fig. 7 shows diagrams illustrating adjustments in each phase of a cell pulse pattern, a main pulse pattern and a total pulse pattern in a control method according to an embodiment of the invention.

Fig. 8a shows a diagram illustrating a flux ripple of the updated reference flux trajectory in comparison to an original reference flux trajectory in a control method according to an embodiment of the invention.

Fig. 8b shows the amplitude of the reference flux trajectories of Fig. 8a.

In principle, identical parts are provided with the same reference symbols in the figures.

DETAILED DESCRIPTION OF EXEMPLARY EMBODIMENTS

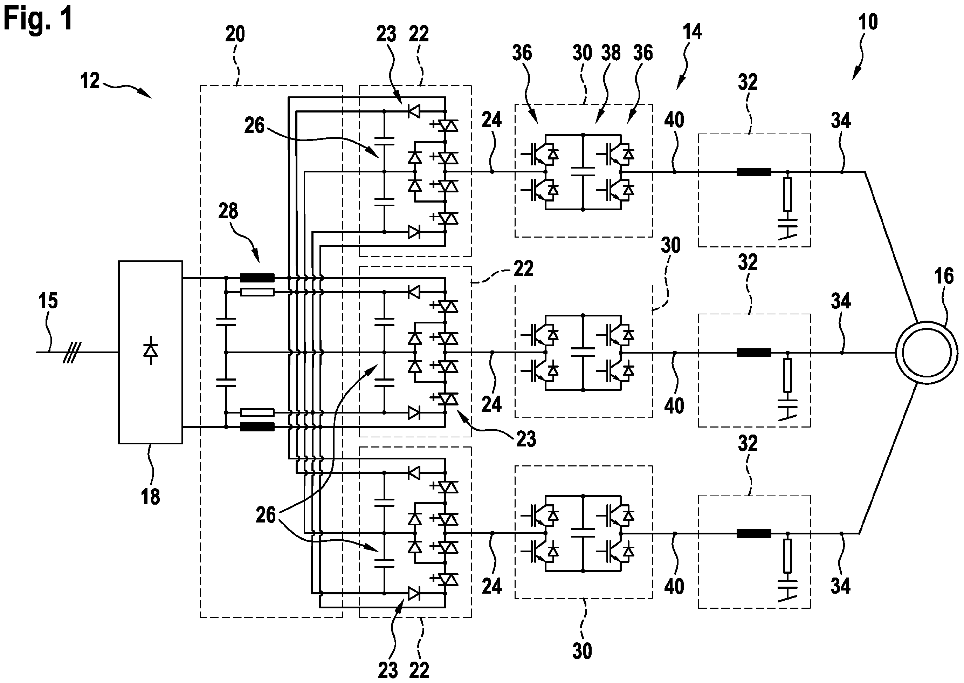

Fig. 1 shows an electrical converter 10 with a main stage 12 and a filter cell stage 14. The electrical converter 10 is adapted for transforming a first AC voltage provided by a power grid 15 into an output voltage to be supplied to an electrical load 16.

The main stage 12 comprises a rectifier 18, which may be a passive diode rectifier and which is adapted for converting the AC voltage from the power grid 15 into a DC voltage, which is supplied to a DC link 20. The DC link 20 may be a split DC link.

Furthermore, the main stage 12 comprises three output converters 22, each of which is adapted for transforming the DC voltage in the DC link 20 into a phase of an intermediate voltage that is provided at outputs 24 of the main stage 12. The output converters 22 are connected in parallel to the DC link 20, for example via clamp inductors and/or resistors 28 or directly. Each of the output converters 22 may comprise a clamp circuit which is composed of the clamp inductors and/or resistors 28 together with the clamp capacitors 26.

Each of the output converters 22 may comprise, as shown, a 3-level neutral point clamped (3LNPC) half-bridge 23, which may be based on IGCTs, but other topologies and semiconductor types are possible. The half-bridges 23 also may be ANPC half-bridges. Also, for the overall main stage 12, other topologies are possible. In general, the main stage 12 may be adapted to provide a two- or multi-level intermediate voltage at the outputs 24, optionally with more than one phase. A half-bridge 23 as shown in Fig. 1 is adapted for generating three different voltage levels for the respective phase of the intermediate voltage.

The clamp inductors and/or resistors 28 together with the clamp capacitors 26provide an IGCT di/dt clamp circuit. In the case of other types of semiconductor switches, such as IGBTs, the clamp circuit may be omitted. The clamp circuits 26 may be used for controlling a device voltage during switching.

For every phase of the main stage 12, the filter cell stage 14 comprises a filter cell 30, which may be seen as an active filter, and optionally a passive output filter 32, which are connected in series between the respective output 24 of the main stage 12 and an output 34 of the electrical converter 10. It may be possible that more than one filter cell 30 is connected in series and/or in parallel between the output 24 and the output 34 of a phase. Each of the passive filters 32 may comprise inductors, resistors and/or capacitors.

Every filter cell 30 comprises two half-bridges 36, which are connected in parallel with a cell capacitor 38. A first midpoint of one of the half-bridges 36 is connected to the output 24 of the main stage 12. A second midpoint of the other half-bridge 36 provides an output 40 of the filter cell 30 and is connected via the optional passive filter 32 with the respective output 34 of the electrical converter 10.

Instead of the passive filter 32 also a dv/dt filter may be employed.

The filter cells 30 comprise three different switching states, that may be reached by switching their semiconductor switches accordingly (two per half-bridge), which, for example, may be IGBTs. In a first switching state, the filter cell 30 directly connects the output 24 with the output 40. Here there may be two redundant states: both upper switches on or both lower switches on. Normally the two redundant states are alternated in the switching cycle. In a second switching state, the converter cell 30 connects the cell capacitor 38 between the outputs 24, 40 such that the cell capacitor voltage of the cell capacitor 39 is added to the intermediate voltage provided at the output 24. In a third switching state, the filter cell 30 connects the cell capacitor 38 between the outputs 24, 40 such that the cell capacitor voltage of the cell capacitor 38 is subtracted from the intermediate voltage provided at the output 24. In such a way, the intermediate voltage from the main stage 12, which usually is shaped like a step-function due to the finite number of levels of the main stage, may be converted into a voltage (i.e. the output voltage) which better approximates a sinusoidal and/or continuous output voltage reference.

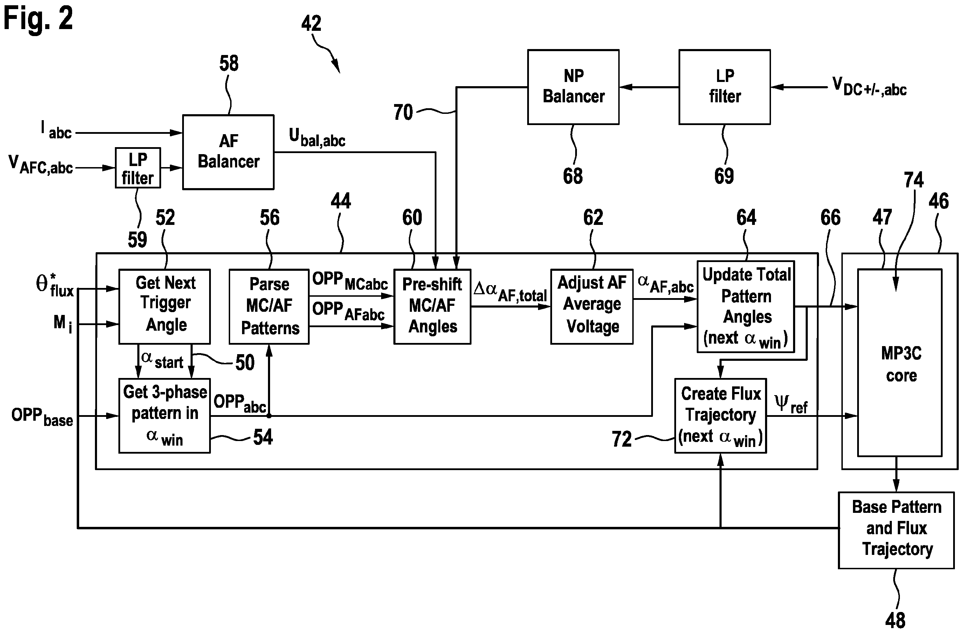

Fig. 2 shows a block diagram for a controller 42, which is composed of a pattern determination controller 44 and a model predictive controller 46. With the controller 42, the electrical converter 10 of Fig. 1 may be controlled. The blocks of the controller also indicate method steps of a control method performed by the controller. The block of the pattern determination controller 44 also may be seen as the pattern determination part 44 of the control method. The block of the model predictive controller 46 also may be seen as the model predictive control part 46 of the method.

The pattern determination part 44 may be executed with a time period equal to 60° of the fundamental frequency of the main stage 12 (MC) of the electrical converter 10. If the main stage fundamental frequency range is 25 - 60 Hz, the execution period would be 6.7 ms - 2.8 ms.

The method is based on optimized pulse patterns $OPP_{base}$ which are generated offline in advance and saved in a database, from which they can be selected and read to be further adjusted and modified online in the pattern determination part 44 and the model predictive control part 46 of the method. For example, an MP3C (model predictive pulse pattern control) core 47 of the model predictive controller 46 may select an appropriate optimized pulse pattern OPP$_{base}$ , with a required modulation index M$_i$ and flux reference angle $\theta^*_{flux}$ as determined in block 48. To account for field weakening, the flux reference amplitude may need to be scaled further.

Based on the flux reference angle $\theta^*_{flux}$ and the modulation index M$_i$ provided by the outer loop controllers as well as an angle value representing the delay until the next control cycle, a trigger signal 50 is generated in block 52 of the pattern determination part 44. If the trigger signal 50 is true (meaning "update is needed"), a 3-phase set of nominal pulse patterns OPP$_{abc}$, which are directly calculated (see below) from the original single-phase optimized pulse pattern OPP$_{base}$ , will be updated as described herein in the pattern determination part 44 for the next computation window $\alpha_{win}$. A suitable offset angle $\alpha_{off}$ of the computation window $\alpha_{win}$ within the fundamental period may also be determined by the modulation index M$_i$, and from this it is determined if the flux reference angle $\theta^*_{flux}$ is still within the current window $\alpha_{win}$ or will leave the window within the next controller cycle. If it is not, an update is required.

This may also take into account any delays in a microcontroller, so that the pattern for the next computation window $\alpha_{win}$ is always available. Furthermore, this may also include double-buffering of the pulse pattern, i.e. providing pulse patterns by the pattern determination part 44 for the next two computation windows $\alpha_{win}$ , so that a next pattern can always be switched to if necessary. This ensures that there is always a pattern available to feed into an MP3C (model predictive pulse pattern control) core 47 of the model predictive controller 46.

If an update is required, i.e. if the trigger signal 50 generated in block 52 is true, the currently available single-phase OPP$_{base}$ selected by the MP3C core 47 is read and shifted appropriately in block 54 to generate the three phases A, B, C of the intermediate voltage over the next computation window $\alpha_{win}$. The new three-phase pattern OPP$_{abc}$ is then parsed in block 56 into a main pulse pattern OPP$_{MCabc}$ for the main stage 12 (also denoted as MC, or main converter) and a cell pulse pattern OPP$_{AFabc}$ for the filter cell stage 14 (also denoted as AF, or active filter).

The main pulse pattern OPP$_{MCabc}$ and the cell pulse pattern OPP$_{AFabc}$ comprise switching instants for the main stage 12 or, respectively, for the filter cell stage 14 for the next computation window $\alpha_{win}$. This may include main stage and filter stage angles $\alpha_{AF}$ , $\alpha_{MC}$ along with corresponding switch positions U$_{MC}$ and U$_{AF}$ and change in switch positions $\Delta$U$_{AF}$, $\Delta$U$_{MC}$ . The first angle is always zero and the last angle is always the length of the window $\alpha_{win}$. The switching angles may be normalized by subtracting a starting angle $\alpha_{start}$ (also denoted as $\alpha_{st}$, see below) of the computation window $\alpha_{win}$ and taking care that the crossing over from 360° to 0° is accounted for. A flag may also be generated for each filter stage angle $\alpha_{AF}$ which is synchronized with a main stage angle $\alpha_{MC}$ , which can be done to reduce the combined voltage step by switching with a double step size in the opposite direction.

To achieve cell balancing of filter cells 30, an active filter (AF) cell voltage balancer 58 and subsequent adjustment blocks 60, 62 and 64 of the pattern determination part 44 are run.

In the AF balancer 58, the cell capacitor voltages V$_{AFC,abc}$ of the filter cells 30 in the three phases are measured individually (i.e. each phase separately) and optionally processed with low pass (moving average) filters 59. The differences obtained by subtracting a predetermined cell reference capacitor voltage are processed with P- or PI controllers. The output signals can be interpreted as non-zero difference voltage references U$_{bal,abc}$ that need to be injected by the (active) filter cells 30 in order to accumulate charge in the respective cell capacitor 38 and consequently charge or discharge the cell capacitor 38. If the cell voltage V$_{AFC,abc}$ matches the reference voltage, the average voltage created by the filter cell 30 over one computation window $\alpha_{win}$ should be unchanged since the OPPs are generated such that the fundamental component of the cell pulse pattern OPP$_{AFabc}$ is zero. The fundamental component power is provided only by the main stage 12.

In the AF balancer 58, the signs of the phase currents I$_{abc}$ need to be accounted for such that the difference voltage command for the filter cell 30 drives the cell voltage in the correct direction, i.e., the PI controller outputs are multiplied with the sign of the corresponding phase current I$_{abc}$. To compensate for delays in the current measurement and to avoid applying the wrong sign over the computation period, the phase angle of the fundamental current relative to the flux reference angle $\theta^*_{flux}$ can be used as a reference from which the current sign can be advanced so that the correct sign is applied over the upcoming computation window $\alpha_{win}$.

In blocks 60, 62 and 64 described in more detail further below, the total or combined OPPs for the main stage 12 and filter stage 14 of the electrical converter 10 are then updated to the newly shifted values of the filter stage angles $\alpha_{AF}$. The resulting total (or parsed) adjusted optimized pulse pattern 66 comprises or consists of switching states, the change in switching states and switching angles for the three phases for both the main stage 12 and the filter stage 14 of the electrical converter 10.

In blocks 60, 62 and 64, in particular, the injected balancing voltage for the filter cells 30 must be compensated by corresponding adjustments for the main stage 12 such that the sum of the main stage and filter stage (three phase) voltages is unchanged and no impact on the flux trajectory or the torque control occurs. Since the pulse patterns $OPP_{MCabc}$ for the main stage 12 can have very low pulse numbers, it will often be the case that only two out of the three phases switch. To ensure that there are always at least two phases available, the modulation index dependent offset $\alpha_{off}$ of the computation window $\alpha_{win}$ is set accordingly. To properly compensate the voltage injected by the filter cells 30, the differential mode balancing signal must be distributed to the main stage phases that are switching. The desired volt-second shift for each of the active filter cell phases must then be computed taking into account the possible preshift of the synchronized angles $\alpha_{AF,abc}$ of each active filter cell 30. The result is a total effective volt-second shift reference for each of the active filter cell patterns $OPP_{AFabc}$. The originaly generated total 3-phase pattern $OPP_{abc}$ for the main stage 12 and the cell stage 14 is then updated with the modified angles.

Optionally, in addition to the active cell balancer 58, a neutral point (NP) potential balancer 68 may be run. In the NP balancer 68, a difference is calculated between the upper and lower DC link voltages $V_{DC+/-}$, which are measured at the DC link 20 in the main stage 12 of the electrical converter 10. The calculated difference is optionally processed with a low pass (moving average) filter 69. Subsequently, the difference compared to a predetermined reference NP voltage (which is nominally zero in this example) is processed with a P- or PI controller, and the resulting NP balancing control signal 70 is fed to the blocks 60, 62 and 64 so as to be accounted for in the online adjustment of the nominal pulse patterns $OPP_{MCabc}$ and $OPP_{AFabc}$. For example, the NP balancing control signal 70 may be configured such that the NP error is compensated with MC pulses in the pulse pattern $OPP_{MCabc}$ of the main stage 12. The NP error can, for instance, be added as a common mode component to the main stage pattern $OPP_{MCabc}$, but it can also be added by shifting the angles in other ways. It must typically be added over 120° or 180°.

In block 72, a new, i. e. updated reference flux trajectory $\Psi_{ref}$ over the computation window $\alpha_{win}$ is then computed based on the modified angles according to the total adjusted optimized pulse pattern 66. Fortunately, the offline-calculated $OPP_{base}$ typically contains a nominal flux trajectory which is also calculated offline. Therefore, as described in more detail further below, an initial flux trajectory angle and alpha-beta components $\Psi_{nominal,\alpha\beta}$ can be interpolated easily and used as the starting point for an accurate calculation of the ripple in the reference flux trajectory $\Psi_{ref}$ using a simple piecewise integration of the total adjusted optimized pulse pattern 66. The newly generated reference flux trajectory corner points consist of the unique angles in the $\alpha\beta$-plane plus the flux $\alpha\beta$-components over the computation window $\alpha_{win}$. In the case where NP balancing is also taken into account, the nominal flux trajectory $\Psi_{nominal}$ is only used as the initial condition every second or third update. Otherwise, the endpoint of the previously calculated flux trajectory segment is used as the starting point for the next computation window $\alpha_{win}$. This ensures that the NP balancing adjustment occurs over 120° or 180°.

The updated 3-phase pulse pattern 66 and the newly generated reference flux trajectory $\Psi_{ref}$ are stored as lookup tables. Thereby, they are made available for the model predictive controller 46 for use in the next computation window $\alpha_{win}$.

It is also possible that the pattern determination controller 44 calculates the total adjusted optimized pulse pattern 66 and the flux reference trajectory 76 for the next two computation windows $\alpha_{win}$ and stores them, e.g. in the lookup tables. This may simplify an implementation on a microcontroller because the method may be run in a lower-priority interrupt and may compute the adjusted optimized pulse pattern 66 for the over-next computation windows $\alpha_{win}$ while the model predictive controller 46 works on the active computation windows $\alpha_{win}$ that has been computed previously.

In the model predictive control part 46 of the method, the core 47 of the model predictive controller 46 executes the adjusted optimized pulse pattern 66 and controls the stator flux to follow the reference flux trajectory $\Psi_{ref}$. For this, the core 47 reads the adjusted optimized pulse pattern 66 and the reference flux trajectory $\Psi_{ref}$ from the look-up tables and receives an estimated flux 74, which is calculated from measurements in the electrical converter 10.

The model predictive control part as well as the model predictive control may be performed like in EP 2 469 692 A1, which is incorporated by reference.

In general, the tasks and/or method steps of the model predictive control part are performed several times during the computation window $\alpha_{win}$.

In the model predictive control part 46, the adjusted optimized pulse pattern 66 received from the pattern determination controller 44 is further modified by moving at least one transition time and/or time point of a switching instant, such that a flux error determined from a difference between the estimated flux 74 of the electrical converter 10 and the reference flux trajectory $\Psi_{ref}$ is minimized. To this end, an objective function is used, into which the transition times and/or time points of the switching instants are input.

At least a next switching instant from this modified pulse pattern is then applied to the electrical converter 10. This means that the switches of the main stage 12 and the filter cell stage 14 are switched at the transition time of the next switching instant to the switching position as indicated by the next switching instant.

In case there is a torque step or any other disturbance that leads to a stator flux reference angle which is outside of the angle range corresponding to the precomputed computation window $\alpha_{win}$, the flux reference trajectory $\Psi_{ref}$ is skipped and a circular flux reference trajectory at the stator flux reference angle is used instead.

In the following, possible embodiments of the blocks of Fig. 2 are described in more detail.

Filter cell balancer 58

The active filter (AF) cell voltage balancer 58 (also denoted as AF balancer) may be implemented as a P controller or a PI controller. It operates on the difference of the capacitor or DC link voltage $V_{AFC,x}$ of the filter cell 30 in phase x to the reference capacitor (or DC link) voltage $V_{ref}$. The capacitor or DC link voltage $V_{AFC,x}$ may be filtered with the low-pass filter 59 or a moving average filter over one half of a fundamental period. The output of the filter cell balancer 58 is multiplied with the sign of the current I in the corresponding phase x:

$$U_{bal,AF,x} = G_{PI}(s) \cdot \left( V_{ref} - G_{LP}(s) \cdot V_{AFC,x} \right) \cdot \text{sign}(I_x)$$

The balancing voltage $U_{bal}$ or average output voltage reference $U_{bal}$ will be injected by the filter cells 30 as a deviation from the original optimized pulse pattern $OPP_{base}$ in order to control the cell capacitor or DC-link voltage $V_{AFC,x}$ to the cell reference voltage $V_{ref}$.

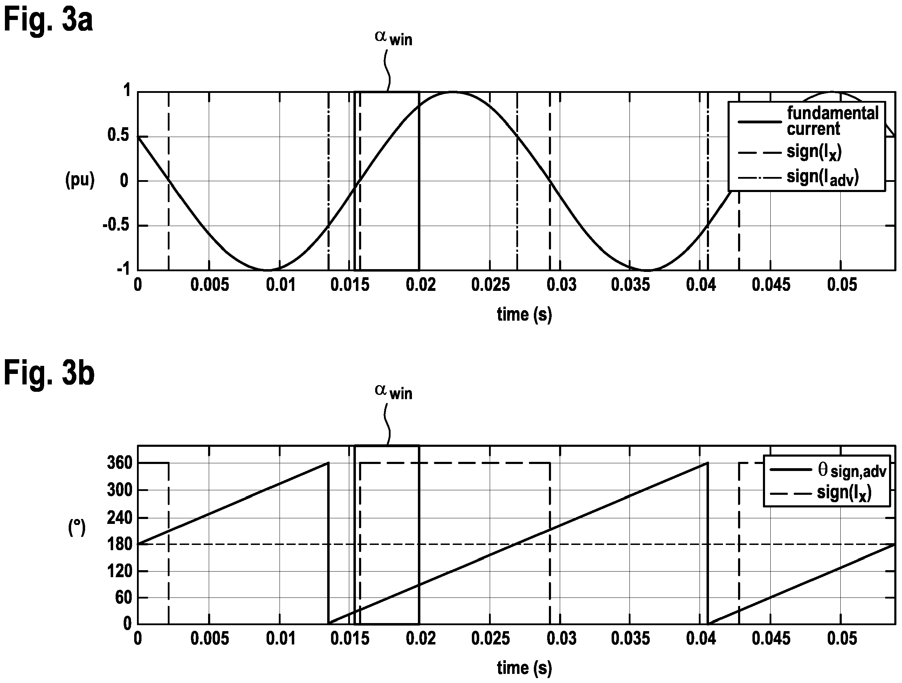

The sign of the current in a phase, $I_x$, must also be carefully accounted for over the complete upcoming computation window $\alpha_{win}$, as shown in Fig. 3a-3c. Fig 3a shows the fundamental current $I_x$, its instantaneous sign, $\text{sign}(I_x)$, and a shifted sign function, $\text{sign}(I_{adv})$. Fig 3b shows the angle of the shifted sign function, $\theta_{sign,adv}$ and the instantaneous sign, $\text{sign}(I_x)$, over several fundamental periods. As recognizable from these diagrams, it can easily happen that the sign of the current I changes immediately after sampling. This can result in having the wrong sign for the balancing signal $U_{bal}$ over an entire computation window $\alpha_{win}$.

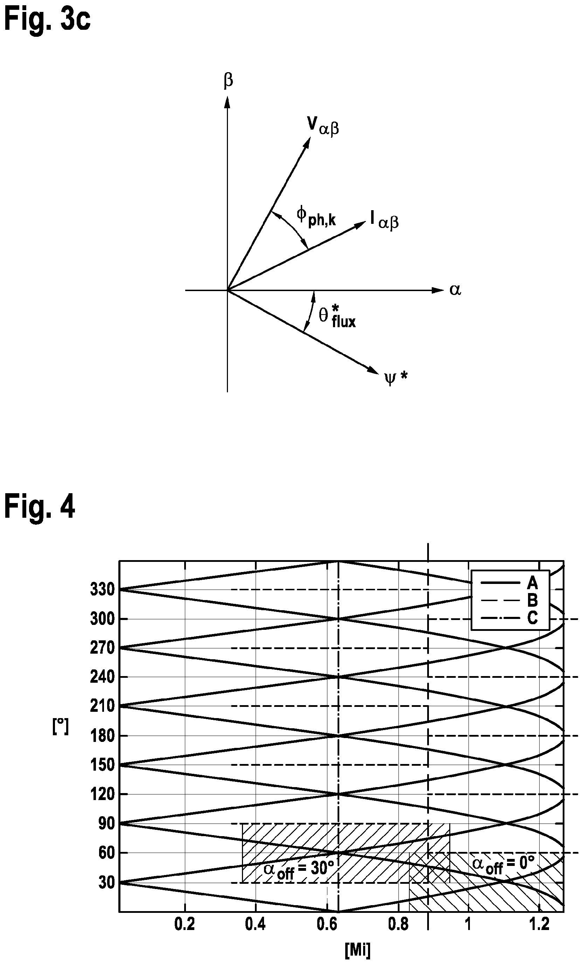

To avoid this the sign of the angle $\theta_{sign,adv}$ of Fig. 3b can be calculated using an estimated displacement angle $\phi_{ph}$ of the current I , as defined in Fig. 3c, which can also be filtered sufficiently to provide a smooth reference. This can, for example, be easily provided by outer control loops along with the flux reference angle $\theta_{flux}^*$ provided by the core 47 of the model predictive controller 46. The displacement angle $\phi_{ph}$ of the current I is defined relative to the fundamental voltage angle, which is assumed to lead the flux reference by $\pi/2$. In Fig. 3c, both the fundamental current I and the fundamental voltage V are represented as vector quantities having two vector components in an orthogonal reference frame, the $\alpha\beta$-plane.

In addition, the sign of the current I is based on the sine function rather than the cosine function and thus must be further advanced by $\pi/2$. An advancement angle $\alpha_{adv}$ can then be used to shift the estimated angle forward by, for example, half of the computation window $\alpha_{win}$ to ensure that the sign is correct for at least half of the computation window $\alpha_{win}$.

$$\theta_{sign,adv} = \theta_{flux}^* + \phi_{ph} + \pi + \alpha_{adv}$$

If we ensure that $0 \leq \theta_{sign,adv} \leq 2\pi$, we can simply compare the angle of the current of each phase $I_{adv}$ in the following manner:

$$sign(I_{adv}) = \begin{cases} 1, & \theta_{sign,adv} < \pi \\ -1, & \theta_{sign,adv} \geq \pi \end{cases}$$

Other methods can also be used, such as vector rotation, but may be more computationally expensive.

Trigger signal generator 52

The purpose of the trigger signal generating block 52 is to determine if the flux reference angle $\theta_{flux}^*$ is still within the computation window $\alpha_{win}$ and to trigger a recalculation of the patterns in the pattern determination part 44 if it is not. One way to do this is to calculate a starting angle $\alpha_{st}$ for a computation window $\alpha_{win}$ containing the current flux reference angle, $\theta_{flux}^*$ , and see if it is equal to the starting angle $\alpha_{st}$ of the current computation window $\alpha_{win}$. For example, three inputs may be taken into account to perform this calculation: the computation window width ($\alpha_w$), the delay until the newly generated pattern is available ($\alpha_{Ts}$), and an offset $\alpha_{off}$ dependent on the modulation index $M_i$. The

offset angle dependence is taken into account to ensure that at least two phases are switching in any computation window $\alpha_{win}$. This is needed because to fully compensate the balancing volt-seconds injected into the three filter cell phases, at least two phases of the main stage 12 must switch in any computation window $\alpha_{win}$.

Fig. 4 shows diagrams illustrating the switching angles over the full range of modulation index $M_i$ for a pulse number of one for the main stage 12. It can be seen that the minimum computation window $\alpha_{win}$ must be at least 60° wide and, depending on the modulation index $M_i$, two possible offsets $\alpha_{off}$ could be chosen. The offset angle $\alpha_{off}$ of the computation window $\alpha_{win}$ can be determined with a hysteresis function based on the modulation index $M_i$. To avoid changing $\alpha_{off}$ too often, the large overlap of the offset regions can be used as shown in the figure. Once $\alpha_{off}$ is determined, the following function can be used to calculate the starting angle $\alpha_{st}$ for the computation window $\alpha_{win}$ :

$$\alpha_{st} = \alpha_w \, \text{floor}((\theta_{flux}^* + \alpha_{TS} - \alpha_{off})/\alpha_w) + \alpha_{off}$$

where $\alpha_w$ is the width of the computation window $\alpha_{win}$. The angle $\alpha_{TS}$ represent the delay due to the microcontroller sample time $T_s$ of the pattern generation task which depends on the fundamental frequency $f_{fund}$:

$$\alpha_{TS} = 2\pi f_{fund} T_s$$

The sample angle, $\alpha_{Ts}$, can be used to look ahead to the upcoming sample period, in the case of microcontroller delays and cycle times, to determine if the flux reference angle $\theta_{flux}^*$ will still be in the computation window $\alpha_{win}$. If the starting angle $\alpha_{st}$ is different from the current starting angle, an update to the pattern will be required. Once the new starting angle $\alpha_{st}$ is determined, the following function provides a flag to indicate if an update is required or not:

$$update = \begin{cases} 1, & \alpha_{st}(j) \neq \alpha_{st}(j-1) \\ 0, & \alpha_{st}(j) \equiv \alpha_{st}(j-1) \end{cases}$$

Here, the value 1 means that the trigger signal 50 generated in block 52 is true, which triggers an updating of pulse patterns by the pattern determination part 44.

Multiple-phase pattern generator 54

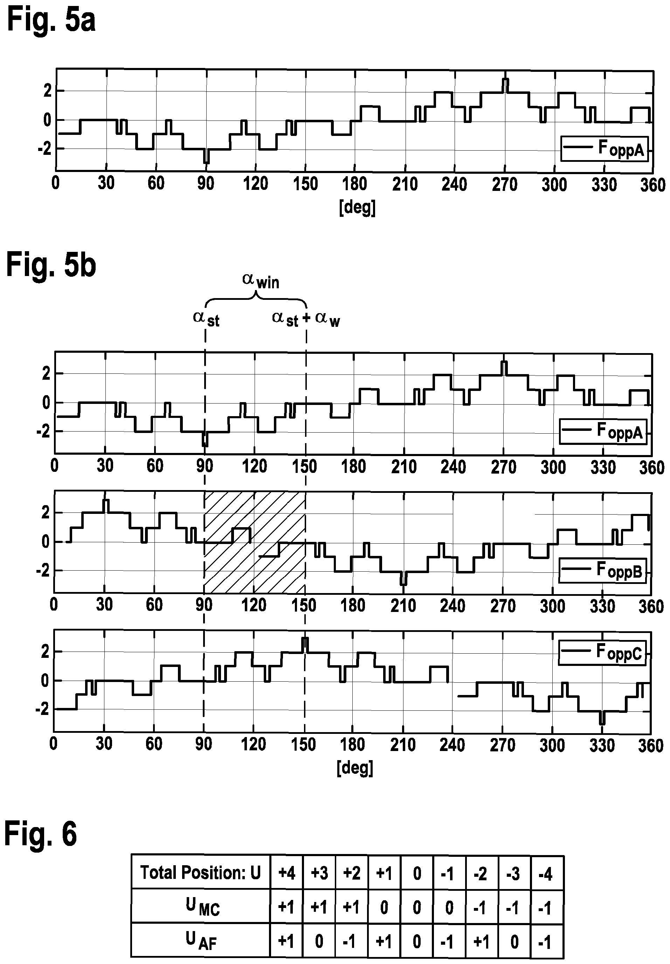

Multiple-phase pattern generator 54 reads, for example, a total single-phase pattern OPP$_{base}$ currently selected by the MP3C core 47, as shown in Fig. 5a (FoppA). From the total single-phase pattern OPP$_{base}$, the generator 54 generates a total optimized pulse pattern OPP$_{total,abc}$ for each phase A, B, C of the intermediate voltage at the output 40 by comparing the switching angles of the switching states defined in the total single-phase pattern OPP$_{base}$ to the computation window bounds: ( $\alpha_{st}$, $\alpha_{st}$ + $\alpha_w$) for each phase, as shown in Fig. 5b, and stores the selected pattern segments in an array OPP$_{total,abc}$. In other words, the resulting 3-phase pattern OPP$_{total,abc}$ contains all three phases A, B, C, wherein the following data is stored for each transition (i. e. switching instant) in the respective phase: transition angle $\alpha_i$, final position at end of transition U$_i$, change in position at transition $\Delta$U$_i$. Here, i is an integer number indicating the number of the transition in the respective pulse pattern sequence.

Care must be taken that the angles for each phase are in the correct order with the first entry at the beginning of the computation window $\alpha_{win}$ and the last entry at the end of the window $\alpha_{win}$. This applies also when crossing over 360°/0° such that the higher angles are first in OPP$_{base}$. The 3-phase total optimized pulse pattern OPP$_{total,abc}$ is then passed to the next functional blocks of the pattern determination part 44.

Main stage and cell stage pattern parser 56

In the parsing block 56, the total optimized pulse pattern OPP$_{total,abc}$ is parsed into a main pulse pattern OPP$_{MCabc}$ for the main stage 12 (also denoted as MC, or main converter) and a cell pulse pattern OPP$_{AFabc}$ for the filter cell stage 14 (also denoted as AF, or active filter). The filter cell voltage balancer 58 determines the volt-seconds injection required for each active filter cell 30 to balance its capacitor voltage. At the same time, the main stage must compensate this volt-seconds injection so that the sum of MC + AF voltage is unchanged. In order to do this, the switching instants of each phase of the total optimized pulse pattern OPP$_{total,abc}$ must be parsed so they can be individually be shifted:

$$OPP_{total,abc} => OPP_{MC,abc}, OPP_{AF,abc}$$

The switching angles are then normalized to the computation window $\alpha_{win}$ by subtracting $\alpha_{st}$ from the parsed pattern angles and taking care that the crossing over from 360° to 0° is accounted for. In this way, the first angle is always zero and the last angle is always the length $\alpha_w$ of the computation window $\alpha_{win}$.

The switching positions U of the total pulse pattern $OPP_{total,abc}$ can be decoded or parsed into positions $U_{MC}$ and $U_{AF}$ of a corresponding main pulse pattern $OPP_{MC,abc}$ and cell pulse pattern $OPP_{AF,abc}$ according to the Table shown in Fig. 6:

The initial switch position $U_0$ at $\alpha_{st}$ is determined from

$$U_0 = U_1 - \Delta U_1,$$

where $U_i$ = [-4, ..., +4] is the position, and $\Delta U_i$ = [-1, +1] is the change in position at angle $\alpha_i$. The final position $U_{end}$ is the value of the last position in the pattern in the computation window $\alpha_{win}$ (i.e. $U_{end}(\alpha_{end})$ where $\alpha_{end}$ = last $\alpha_i < \alpha_{st}$ + aw).

To identify the main stage transitions, the main stage position $U_{MC}$ must be monitored for when the previous position is different from the current position. In this case, $\Delta U_i$ for the main pulse pattern $OPP_{MC,abc}$ is the same as for the total pulse pattern $OPP_{total,abc}$. The cell stage transitions $U_{AF}$ which may be synchronized, if any, with the main stage transitions $U_{MC}$ generate a flag. For the cell pulse pattern $OPP_{AF,abc}$ , the $\Delta U_i$ is in the opposite direction as for the main pulse pattern $OPP_{MC,abc}$ and has double the nominal step size to minimize the voltage step size of the combined transition. The cell stage behavior for synchronized transitions can be considered in two different ways: 1) as a single transition where the step size is multiplied by two or 2) as two single step transitions at the same angle. Storing the transition as a double sized single step will result in reduced storage requirements.

For the normal non-synchronized cell stage transitions $U_{AF}$, $\Delta U_i$ is the same as for the total pulse pattern $OPP_{total,abc}$.

The phases which do not switch in the main pulse pattern $OPP_{MC,abc}$ must also be tracked for use in the distribution of the volt-second compensation.

Main stage and cell stage pre-shifter 60

Block 60 is configured to ensure that the total average voltage (i.e. the averaged sum of the output voltage of the main stage 12 and the output voltage of the filter cell stage 14 over a computation window $\alpha_{win}$) is not changed by the balancing process, in particular as induced by the filter cell balancer 58. This ensures that the flux trajectory returns to the original reference at the end of the computation window $\alpha_{win}$. The most efficient way to execute this algorithm is to first shift the main stage transitions and the synchronized cell stage transitions, if any, and only then move on to the shifting of the cell stage transitions for balancing the filter cell voltages.

The required balancing voltage $U_{bal}$ to inject for the respective filter cell 30, as already known from the filter cell balancer 58, needs to be subtracted from the main stage voltage, but only the differential mode (DM) components. This can be computed by using the standard Clark transform:

$$U_{dm,\alpha\beta} = U_{bal,AF,\alpha\beta} = T_{abc} U_{bal,AF,abc}$$

where

$$T_{abc} = \begin{bmatrix} 2/3 & -1/3 & -1/3 \\ 0 & 1/\sqrt{3} & -1/\sqrt{3} \end{bmatrix}$$

Due to the very low pulse number of the main stage 12, it is often the case that only two of the three phases will be switching and therefore a method of distributing the total volt-second compensation to the active phases is needed. To only briefly describe this method, the derivation of the transformations will be omitted, but the transforms will be shown for completeness here. In the case where all three phases are switching, which can occur with higher pulse numbers, the standard inverse Clark transform can be used:

$$T_{abc}^{-1} = \begin{bmatrix} 1 & 0 \\ -1/2 & \sqrt{3}/2 \\ -1/2 & -\sqrt{3}/2 \end{bmatrix}$$

In the case where one of the phases does not switch, the following three transforms can be used in the appropriate case:

$$T_{ab}^{-1} = \begin{bmatrix} 3/2 & \sqrt{3}/2 \\ 0 & \sqrt{3} \\ 0 & 0 \end{bmatrix}$$

$$T_{bc}^{-1} = \begin{bmatrix} 0 & 0 \\ -3/2 & \sqrt{3}/2 \\ -3/2 & -\sqrt{3}/2 \end{bmatrix}$$

$$T_{ac}^{-1} = \begin{bmatrix} 3/2 & -\sqrt{3}/2 \\ 0 & 0 \\ 0 & -\sqrt{3} \end{bmatrix}$$

The switching phases A, B, or C are indicated in the subscripts in the symbols $T_{xx}^{-1}$ of the transforms. Thus, depending on the needed transformation, the total shift required for the main stage pattern OPP$_{MC,abc}$ can be computed:

$$U_{dm,MC,abc} = T_{xx}^{-1} U_{dm,\alpha\beta}$$

and the resulting total angel shift is the following

$$\Delta\alpha_{MC,x} = -U_{dm,MC,x}$$

For each phase $x = a, b, c$ of the main stage 12, the shifting algorithm, which will be described in the next section for the cell stage shifting, is used. It is important to do the main stage pattern shifting separately so that the full range of available shifting can be used to maximize the possibility of achieving the desired compensation. The limitations are: neighboring main stage transitions, the minimum pulse width and the beginning and end of the computation window $\alpha_{win}$.

In addition to applying transition shifts to compensate the cell stage balancing shifts, the main stage transitions can also be shifted to balance the neutral point (NP) potential of the main stage 12 according to the control signal 70 of the neutral point potential balancer 68. This can easily be done at this point in the algorithm by adding the additional shift to $\Delta\alpha_{MC,x}$.

Once the necessary and achievable main stage shifts are completed, any synchronized angles of the cell stage 14 must be shifted by the same amount. This is done by copying the modified switching angles of the main stage 12 to the synchronized switching angles of the cell stage 14 and maintaining the order of the transitions (i.e. switching instants) so that the final shifting algorithm for the cell stage angles can ensure that all cell stage limitations are accounted for. The pre-shifted, synchronized cell stage angles must then be taken into account when computing the total volt-second shift of each phase of the cell stage 14.

To start with, each phase ($x = a, b, c$) of the total nominal volt-second shift for the active filter 30 is calculated as

$$\Delta\alpha_{AFN,x} = U_{bal,AF,x}/r_{AF}$$

where $r_{AF}$ is the ratio of the voltage value of the DC link of filter cell 30 to half of the voltage value of the DC link of main stage 12 for the same phase. Each synchronized angle is then taken into account by summing the shifts of each main stage angle and multiplying the result by two. The reason for this was described in the previous section and has to do with the reduction of the combined voltage step by switching the filter cells 30 with a double step size in the opposite direction as the main stage 12. This results in the total effective shift for the filter stage 14 per phase:

$$\Delta\alpha_{AF,x} = \Delta\alpha_{AFN,x} + \sum_{i} 2 \cdot \text{sign}\left(\Delta U_{AFalign,x,i}\right)\Delta\alpha_{MC,x,i}$$

Filter cell average voltage adjuster 62

Filter cell average voltage adjuster 62 is one of the key parts of the algorithm of the pattern determination part 44 and is used for both the main stage 12, as described above, and as it is explained here for the filter cell stage 14. Ideally, the average power injected by the filter cell 30 over a fundamental period should be zero, because the load power should be provided only by the main stage 12. Otherwise, the filter cell 30 would charge or discharge since there is no external supply. The original OPP$_{base}$ are optimized such that the average filter cell output fundamental voltage is zero.

Therefore, the filter cell average voltage adjuster 62 has been introduced to adjust the average output voltage deviation from the original pattern over a computation window $\alpha_{win}$ to make it equal to the voltage command or average output voltage reference $U_{bal}$ of the filter cell balancer 58. This is done by moving the switching angles of the cell pulse pattern OPP$_{AF,abc}$ until the expected average voltage change is achieved.

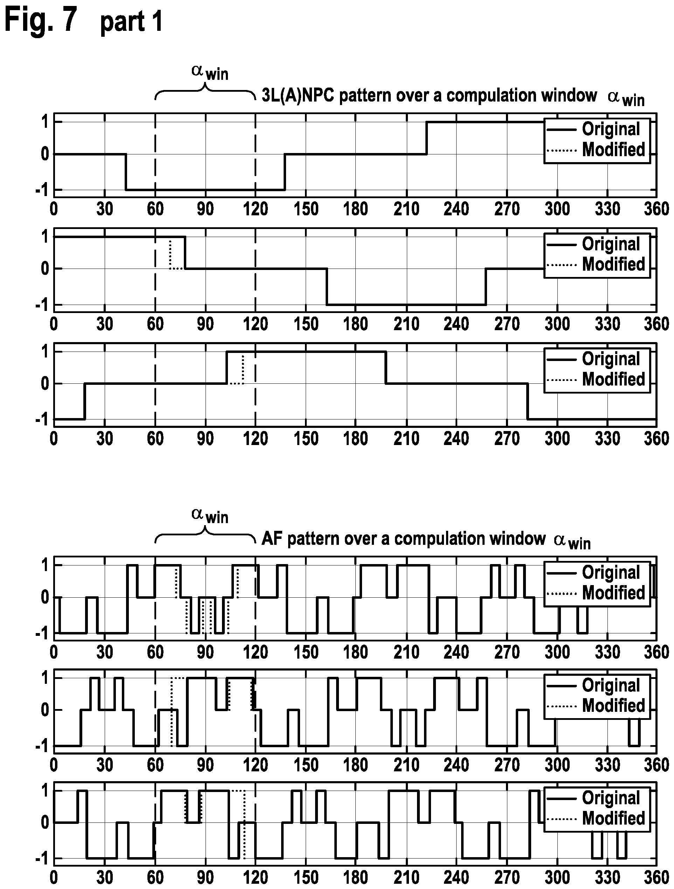

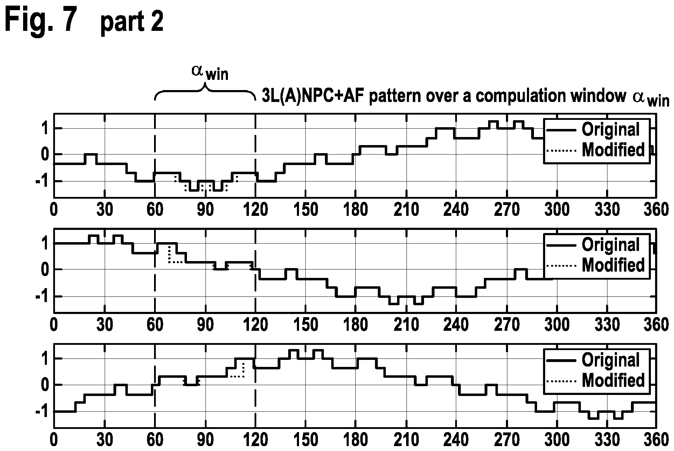

Fig. 7 shows an example set of pulse patterns for each phase A, B, and C, of the main stage 12 (also denoted as MC or 3L(A)NPC, see above), of cell stage 14 (also denoted as AF, see above) and of the combination of the main stage 12 and the cell stage 14 (3L(A)NPC+AF). Each pattern shows the original patterns (solid lines) and the adjustments (dashed lines) made within the computation window $\alpha_{win}$ to balance the filter cell voltages and compensate the volt-second errors introduced. In the following, these adjustments or modifications of the original patterns are explained in more detail:

To reduce the average voltage, positive voltage steps are moved to the right (postponed), whereas negative voltage steps are moved to the left (advanced). To increase the average voltage, the respective pulses are moved in the opposite direction.

Several strategies for moving the pulses are possible. One method aims to move all the available pulses by the same angle shift to achieve the total shift. To distribute the total required shift equally to the available (movable) voltage transitions $N_{tr}$, the following equation can be used to calculate the angle shift which needs to be applied to each switching transition:

$$\Delta\alpha_{AF,x,i} = \Delta\alpha_{AF,x} \frac{1}{N_{tr}} \text{sign}\left(\Delta U_{AF,x,i}\right)$$

Applying $\Delta\alpha_{AF,x,i}$ to every switching transition ensures that the filter cell average output voltage deviation from the original pattern OPP$_{AF,abc}$ is equal to the voltage command or average output voltage reference $U_{bal}$ of the filter cell balancer 58 after modification. It is also possible that constraints restrict how much a certain pulse can be moved, e.g. the ends of the computation window $\alpha_{win}$, neighboring transitions, etc., or that certain switching transitions should not be moved at all, e.g. if they are synchronized with the switching of the main stage 12. Furthermore, one could distribute the total required angle shift to the available pulses in a different way (e.g., try to achieve the total shift by moving the first pulses as much as possible) or try to achieve the adjusted average by executing the algorithm several times. The final result of the adjustment is the modified three-phase pattern for the filter cell stage 14, OPP$_{AF,abc,mod}$ or for the main stage 12, OPP$_{MC,abc,mod}$. If the desired total volt-second adjustment cannot be made, a transient can occur. If the final error in the adjustment is small enough, it can normally be ignored. In the case that it is significant, however, an alternative approach can be taken, e.g. simply skipping the adjustment if it cannot be fully applied. The computation window $\alpha_{win}$ has been selected to be short enough such that the filter cell capacitor voltage does not change much over the computation window $\alpha_{win}$. Thus, if one balancing period is missed, the effect would be negligible in terms of the active filter voltage control.

Total pattern updater 64

In the total pattern updater 64, an adjusted optimized pulse pattern 66, which is in this example a total pattern $OPP_{total,abc,mod}$, is (re-)computed from the modifications provided in the adjusted three-phase patterns for the filter cell stage 14, $OPP_{AF,abc,mod}$ and, if necessary, also for the main stage 12, $OPP_{MC,abc,mod}$. As shown in Fig. 2, the adjusted patterns for the filter cell stage 14, $OPP_{AF,abc,mod}$ and, as the case may be, also for the main stage 12, $OPP_{MC,abc,mod}$, are received by the total pattern updater 64 from the filter cell average voltage adjuster 62.

Flux trajectory generator 72

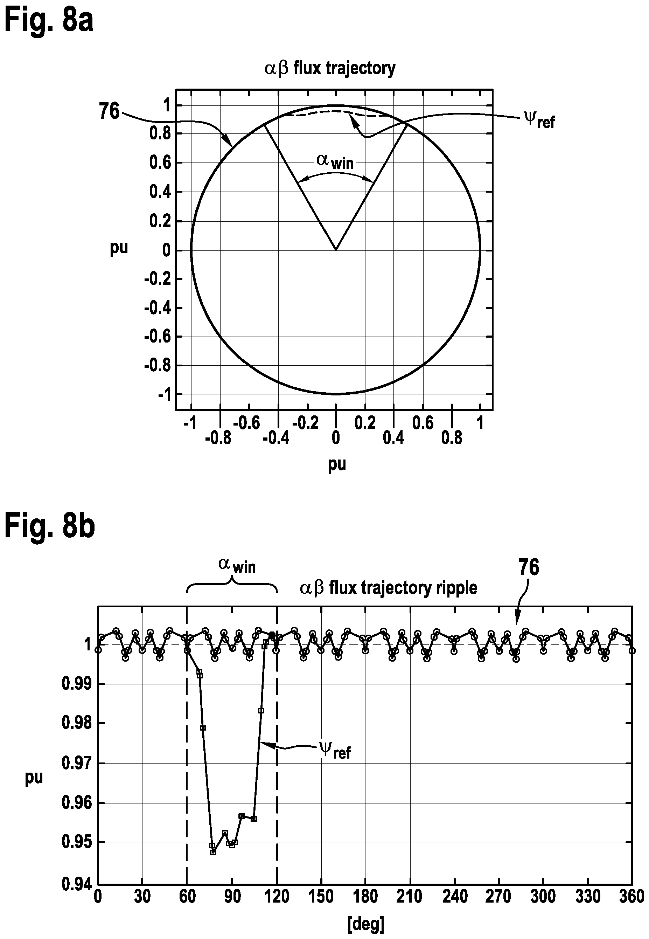

In a final step of the pattern determination part 44, in block 72, the reference flux trajectory $\Psi_{ref}$ is precomputed from the previously adjusted optimized pulse pattern 66, in this example the combined (i. e. total) pulse pattern $OPP_{total,abc,mod}$ for the main stage 12 and the cell stage 14, for the next computation window $\alpha_{win}$. This step is illustrated in Fig. 8a and 8b. Fig. 8a shows, in an exaggerated manner for illustrative purposes, a flux ripple of the updated (i.e. modified or adjusted) reference flux trajectory $\Psi_{ref}$ calculated in block 72 as compared to an original or nominal reference flux trajectory 76 used in the model predictive control part 46 to control the flux. Fig. 8b shows, also in an exaggerated manner, an amplitude of the updated reference flux trajectory $\Psi_{ref}$ as compared to the original or nominal reference flux trajectory 76.
As already mentioned, this step is required for the following reason:
If the original flux trajectory 76, for example a circular flux trajectory, is used instead in the model predictive control part 46 of the method, the model predictive control part 46 will move the pulses of the pulse pattern $OPP_{total,abc,mod}$ provided by the pattern determination part 44 to approximate the original flux reference 76 as closely as possible. Thereby, the previously adjusted pulse pattern $OPP_{total,abc,mod}$ would possibly be overridden and thus would not be applied as precomputed. Consequently, the modifications introduced to balance the filter cell voltage may not be properly applied and the cell voltage could drift and would not be controlled.
Therefore, precomputation of the updated reference flux trajectory $\Psi_{ref}$ including a ripple component according to the previously adjusted optimized pulse pattern $OPP_{total,abc,mod}$ (see Fig. 8a-8b) is required. Fortunately, as the presently proposed method is based on precomputed pulse patterns $OPP_{base}$, a nominal or original reference flux trajectory 76 can also be precomputed offline and loaded into a lookup table. From the precomputed original reference flux trajectory 76, the initial condition can be interpolated to the starting angle of the computation window $\alpha_{win}$.
Due to the shift of the filter cell average output volt-seconds by $U_{bal}$, and the respective subtraction (compensation) of $U_{bal}$ in the main stage reference volt-seconds, the sum of the average main stage and filter cell stage output volt-seconds over the computation window $\alpha_{win}$ remains unchanged and returns to the original total pattern (with respect to differential mode voltage and/or in the orthogonal stationary alpha-beta reference frame). Therefore, after the computation window $\alpha_{win}$, the flux reference trajectory $\Psi_{ref}$ will finally arrive again at the nominal flux trajectory reference 76, as shown in Fig. 8a-8b.
Consequently, the exact reference flux trajectory $\Psi_{ref}$ can be precomputed with simple forward integration over the computation window $\alpha_{win}$. This can be done easily with the nominal flux trajectory 76, which has been generated offline, centered at zero and scaled to unity amplitude. First, the starting point $\alpha_{st}$ may be determined by interpolating the nominal flux trajectory 76 (also denoted as $\Psi_{nominal,\alpha\beta}$) to the starting angle, ast:

$$\Psi_{ref,\alpha\beta}(\alpha_0) = \Psi_{nominal,\alpha\beta}(\alpha_{st})$$

In the case of neutral point (NP) potential balancing (see block 68 in Fig. 2), the last corner point of the flux trajectory from the previous computation window may be used as the new initial point. This is done in one or two consecutive computation windows $\alpha_{win}$ depending on whether the NP balancing must be done over 120° or 180°. Then, on the second or third iteration, the nominal flux trajectory 76 is used again as the initial point.
Next, the previously adjusted total pulse pattern $OPP_{total,abc,mod}$ as obtained from block 64 is merged into an array containing the switch positions of the three phases, $U_{tot,abc}$, at each unique 3-phase switching angle, $\alpha_{unq,abc}$, where $j_{next}$ is the index of the next unique angle within the computation window $\alpha_{win}$ and $j_{end}$ is the index of the angle at the end of the computation window $\alpha_{win}$:

$$\alpha_0 = \alpha_{st}, ..., \alpha_j = \alpha_{unq,abc}(j_{next}), ..., \alpha_{jend} = \alpha_{st} + \alpha_w$$

Then, for each $\alpha_j$ the three-phase switching function, $U_{tot,abc}$, is transformed to the stationary, orthogonal (alpha-beta) reference frame:

$$U_{tot,\alpha\beta}(\alpha_j) = T_{abc} \cdot \begin{bmatrix} U_{tot,a}(\alpha_j) \\ U_{tot,b}(\alpha_j) \\ U_{tot,c}(\alpha_j) \end{bmatrix}$$

It may be important for the operation of the MP3C core 47 to scale the fundamental component of reference flux to unity. To achieve this, the fundamental component of the nominal switching function, $U_{tot,nom,fund}$, must be taken into account. From a predefined constraint of the offline-generated OPP and the fact that the angles are referenced to the flux trajectory in the $\alpha\beta$ -plane the following relation can be found:

$$U_{tot,nom,fund} = -M_i\sin(\theta)$$

When this expression is integrated with respect to the angle $\theta$, the resulting fundamental flux is:

$$\Psi_{ref,nom,fund} = \int -M_i\sin(\theta)d\theta = M_i\cos(\theta)$$

It can be seen that the amplitude is the same as the voltage fundamental: the modulation index $M_i$. Thus, to maintain the average flux reference scaling at unity, the newly computed flux trajectory must be scaled by $1/M_i$. The modulation index $M_i$ can be stored in the lookup table as well to avoid further computations. Finally, the flux trajectory corner points at the switching angle instants $\alpha_j$ are calculated with the following cumulative sum:

$$\Psi_{ref,\alpha\beta}(\alpha_j) = \Psi_{ref,\alpha\beta}(\alpha_{j-1}) + \frac{[U_{tot,\alpha\beta}(\alpha_{j-1}) \cdot (\alpha_j - \alpha_{j-1})]}{M_i}$$

The modified corner points and angles of the flux trajectory ($\alpha_j$, $\Psi_{ref,\alpha\beta}$) along with the 3-phase pattern OPP$_{total,abc,mod}$ are then supplied to the MP3C core 47 of the model predictive controller 46 for the next computation window $\alpha_{win}$.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for controlling an electrical converter (10), the electrical converter (10) comprising a main stage (12) adapted for converting a DC voltage into an intermediate voltage comprising at least two voltage levels and a filter cell stage (14) with a filter cell (30) for each phase of the main stage (12), each filter cell (30) being adapted for adding or subtracting a cell voltage of the filter cell (30) to the intermediate voltage,
   the method comprising a pattern determination part (44) comprising the steps of:

   selecting and reading an offline-computed optimized pulse pattern (OPP$_{base}$) from a database, wherein the selected optimized pulse pattern (OPP$_{base}$) comprises switching instants for the main stage (12) and the filter cells (30) over a next computation window ($\alpha_{win}$) of a predetermined width ($\alpha_w$);

adjusting the optimized pulse pattern ($OPP_{base}$) by moving its switching instants such that average output voltages generated in the filter cells (30) are shifted towards an average output voltage reference ($U_{bal,abc}$) of the filter cells (30), which is determined from measurements in the filter cells (30), and compensating these adjustments by corresponding modifications of switching instants of the main stage (12);

and the method comprising a model predictive control part (46) comprising the following steps, which are performed several times during the next computation window ($\alpha_{win}$):

modifying the adjusted optimized pulse patterns (66) by moving at least one transition time of a switching instant, such that a flux error determined from a difference between an estimated flux (74) of the electrical converter (10) and a reference flux trajectory ($\Psi_{ref}$) is minimized;

applying at least a next switching instant from the modified adjusted pulse pattern to the electrical converter (10).

2. The method of claim 1,
wherein each phase of the average output voltage reference ($U_{bal,abc}$) corresponding to a filter cell (30) is based on a difference of a measured capacitor voltage signal ($V_{AFC, abc}$) of the filter cell (30) and a reference capacitor voltage of the filter cell (30).

3. The method of claim 1 or 2, the pattern determination part (44) further comprising:
determining the reference flux trajectory ($\Psi_{ref}$) over the next computation window ($\alpha_{win}$) from the adjusted optimized pulse pattern (66).

4. The method of one of the previous claims,

wherein the main stage (12) of the electrical converter (10) comprises a DC link (20); and
wherein the method further comprises adjusting the optimized pulse pattern in the pattern determination part (44) of the method by moving the switching instants of the optimized pulse pattern such as to shift a measured voltage difference between an upper and a lower DC link voltage ($V_{DC+/-}$) to a reference neutral point voltage.

5. The method of one of the previous claims,

wherein the selected optimized pulse pattern ($OPP_{base}$) is a single-phase pulse pattern; and
wherein the pattern determination part (44) of the method comprises generating a multiple-phase optimized pulse pattern from the single-phase optimized pulse pattern ($OPP_{base}$) and carrying out the adjustments for each phase separately.

6. The method of one of the previous claims,

wherein the selected optimized pulse pattern ($OPP_{base}$) is a total optimized pulse pattern comprising cumulative switching instants for the main stage (12) and the filter cells (30); and
wherein the pattern determination part (44) of the method further comprises parsing each optimized pulse pattern ($OPP_{base}$) into a main pulse pattern for the main stage (12) and a cell pulse pattern for the filter cell (30) of the respective phase, prior to carrying out the adjustments.

7. The method of one of the previous claims, further comprising:

determining whether a flux reference angle $\left(\theta_{flux}^*\right)$ is within the computation window ($\alpha_{win}$);

generating a trigger signal (50) if the flux reference $\text{angle}\,\theta_{flux}^*$ leaves the computation window ($\alpha_{win}$); and
triggering the pattern determination part (44) of the method by said trigger signal (50).

8. The method of one of the previous claims,

wherein the computation window ($\alpha_{win}$) is a fixed range of angles with respect to the optimized pulse pattern ($OPP_{base}$);
wherein the computation window ($\alpha_{win}$) is a time period corresponding to at least 1/6 of a fundamental period of a reference output voltage of the electrical converter (10).

9. The method of one of the previous claims,

   wherein the steps in the pattern determination part are performed by a pattern determination controller (44); and wherein the steps in the model predictive control part are performed by a model predictive controller (46), which has a faster execution speed than the pattern determination controller (44).

10. The method of one of the previous claims,
    wherein, when a fundamental flux reference is outside an angle range provided by the reference flux trajectory ($\Psi_{ref}$), the flux error is determined from a difference between the estimated flux of the electrical converter (10) and a circular flux trajectory.

11. The method of one of the previous claims,
    wherein the adjusted optimized pulse pattern (66) and the flux reference trajectory ($\Psi_{ref}$) are stored in a look-up table during the pattern determination part (44).

12. The method of one of the previous claims,
    wherein the adjusted optimized pulse pattern (66) and the flux reference trajectory ($\Psi_{ref}$) are calculated and stored in a look-up table during the pattern determination part (44) for the next two computation windows ($\alpha_{win}$).

13. A computer program for controlling an electrical converter (10), which, when being executed by a processor, is adapted to carry out the steps of the method of one of the previous claims.

14. A computer-readable medium, in which a computer program according to claim 13 is stored.

15. A controller (42) for controlling an electrical converter adapted for performing the method of one of claims 1 to 12, the controller comprising:

    a pattern determination controller (44) for performing the steps in the pattern determination part of the method;
    a model predictive controller (46) for performing the steps in the model predictive control part of the method.

16. An electrical converter (10), comprising:

    a main stage (12) adapted for converting a DC voltage into an intermediate voltage comprising at least two voltage levels;
    a filter cell stage (14) with a filter cell (30) for each phase of the main stage (12), wherein each filter cell (30) is adapted for adding or subtracting a cell voltage of the filter cell to the intermediate voltage;
    a controller (42) according to claim 15.

Fig. 1

EP 4 304 073 A1

**Fig. 2**

Fig. 3a

Fig. 3b

# Fig. 3c

# Fig. 4

# Fig. 5a

# Fig. 5b

# Fig. 6

| Total Position: U | +4 | +3 | +2 | +1 | 0 | -1 | -2 | -3 | -4 |
|---|---|---|---|---|---|---|---|---|---|
| $U_{MC}$ | +1 | +1 | +1 | 0 | 0 | 0 | -1 | -1 | -1 |
| $U_{AF}$ | +1 | 0 | -1 | +1 | 0 | -1 | +1 | 0 | -1 |

# Fig. 7   part 1

3L(A)NPC pattern over a compulation window $\alpha_{win}$

AF pattern over a compulation window $\alpha_{win}$

# Fig. 7 part 2

## Fig. 8a

αβ flux trajectory

## Fig. 8b

αβ flux trajectory ripple

Europäisches
Patentamt

European
Patent Office

Office européen
des brevets

# EUROPEAN SEARCH REPORT

**Application Number**

EP 22 18 3835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 058 646 A1 (ABB TECHNOLOGY AG [CH]) 24 August 2016 (2016-08-24) <br> * the whole document * * <br> * in particular: * <br> * paragraph [0001] * <br> * paragraphs [0033] – [0036] * <br> * paragraphs [0097] – [0100] * <br> * paragraphs [0108] – [0112] * <br> ----- | 1-16 | INV. <br> H02M7/487 <br> H02M1/00 <br> H02M7/483 |
| Y | RUFER A ET AL: "Control of a Hybrid Asymmetric Multilevel Inverter for Competitive Medium-Voltage Industrial Drives", <br> IEEE TRANSACTIONS ON INDUSTRY APPLICATIONS, IEEE SERVICE CENTER, PISCATAWAY, NJ, US, <br> vol. 41, no. 2, 1 March 2005 (2005-03-01), pages 655-664, XP011129530, <br> ISSN: 0093-9994, DOI: 10.1109/TIA.2005.844382 <br> * abstract * * <br> * Section I, II, III, IV and V * <br> ----- | 1-16 | |
| A | NIKOLAOS OIKONOMOU ET AL: "Model Predictive Pulse Pattern Control for the Five-Level Active Neutral-Point-Clamped Inverter", <br> IEEE TRANSACTIONS ON INDUSTRY APPLICATIONS., <br> vol. 49, no. 6, <br> 1 November 2013 (2013-11-01), pages 2583-2592, XP055471617, <br> US <br> ISSN: 0093-9994, DOI: 10.1109/TIA.2013.2263273 <br> * abstract * * <br> ----- | 1-16 | TECHNICAL FIELDS SEARCHED (IPC) <br><br> H02M <br> H02P |

The present search report has been drawn up for all claims

| Place of search | Date of completion of the search | Examiner |
|---|---|---|
| The Hague | 30 November 2022 | Standaert, Frans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 3835

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2022

| Patent document cited in search report | | Publication date | Patent family member(s) | | Publication date |
|---|---|---|---|---|---|
| EP 3058646 | A1 | 24-08-2016 | CA | 2926825 A1 | 23-04-2015 |
| | | | CN | 105850015 A | 10-08-2016 |
| | | | EP | 3058646 A1 | 24-08-2016 |
| | | | US | 2016226368 A1 | 04-08-2016 |
| | | | WO | 2015055444 A1 | 23-04-2015 |

EPO FORM P0459

For more details about this annex : see Official Journal of the European Patent Office, No. 12/82

**EP 4 304 073 A1**

**Patent documents cited in the description**

- EP 2469692 A1
- EP 3729637 A1